# EUROPEAN PATENT APPLICATION

(11) **EP 4 578 812 A1**
(43) Date of publication of application: **02.07.2025**
(21) Application number: 24221900.4
(22) Date of filing: 19.12.2024
(51) Int. Cl.: B66B 11/04, B66D 5/14, B66D 5/30

(54) **ELEVATOR BRAKING DEVICE AND ELEVATOR SYSTEM**

(30) Priority: 25.12.2023 CN 202311791737
(71) Applicant: OTIS Elevator Company, Farmington, CT 06032 (US)
(72) Inventor: Gao, Guochen, Tianjin (CN); Liu, Ruguang, Tianjin (CN); Zhu, Fengkun, Tianjin (CN)
(74) Representative: Schmitt-Nilson Schraud Waibel Wohlfrom Patentanwälte Partnerschaft mbB

(57) **Abstract**

An elevator braking device and an elevator system are disclosed. The elevator braking device comprises: a first bracket having a first accommodating area and provided with a guiding member, and fixedly mounted relative to an elevator driving device; a second bracket having a second accommodating area and configured to move along the guiding member relative to the first bracket, wherein the second accommodating area intersects with the first accommodating area to form a common area, volume of the common area changing with movement of the second bracket; and a control portion and a first friction member, wherein the control portion is arranged in the common area and connected to the second bracket, and the first friction member is arranged adjacent to the control portion and is movable along the guiding member relative to the second bracket under control of the control portion, so that the first friction member is in contact with a brake disc of the elevator driving device for braking operation in a first operating state of the elevator braking device, and is out of contact with the brake disc in a second operating state.

## Description

The present disclosure relates to the technical field of elevators, in particular to an elevator braking device and an elevator system.

Various elevator systems such as elevators, escalators, and moving walks have been widely used in many places, bringing great convenience to people's work, production, and travel. In the elevator system, elevator braking device is provided to ensure the safe operation of elevator equipment. For existing elevator devices, they are generally equipped with two typical elevator braking devices, namely block brake and caliper disc brake. Usually, the block brake, featuring compact size, simple structure, low braking torque and the use of a single braking surface, is mainly used in some applications where the building height is relatively low or power and cost investment requirements are modest. The caliper disc brake, featuring high manufacturing and usage costs, complex structure, great braking torque, use of two braking surfaces, and good working performance, is mostly used in high-rise buildings with higher safety requirements.

In view of the foregoing, the present disclosure provides an elevator braking device and an elevator system, so as to solve or at least alleviate one or more of the aforementioned problems and other problems in the prior art, or to provide alternative technical solutions for the prior art.

Firstly, according to one aspect of the present disclosure, an elevator braking device is provided, comprising:
a first bracket having a first accommodating area and provided with a guiding member, and fixedly mounted relative to an elevator driving device;
a second bracket having a second accommodating area and configured to move along the guiding member relative to the first bracket, wherein the second accommodating area intersects with the first accommodating area to form a common area, volume of the common area changing with movement of the second bracket; and
a control portion and a first friction member, wherein the control portion is arranged in the common area and connected to the second bracket, and the first friction member is arranged adjacent to the control portion and is movable along the guiding member relative to the second bracket under control of the control portion, so that the first friction member is in contact with a brake disc of the elevator driving device for braking operation in a first operating state of the elevator braking device, and is out of contact with the brake disc in a second operating state.

Particular embodiments further may include at least one, or a plurality of, the following optional features, alone or in combination with each other:

In an elevator braking device according to the present disclosure, optionally, the elevator braking device further comprises a second friction member arranged in the second accommodating area and connected to the second bracket, and the first friction member and the second friction member are in contact with opposite first and second sides of the brake disc respectively for the braking operation in the first operating state, and are out of contact with the first and second sides respectively in the second operating state.

In an elevator braking device according to the present disclosure, optionally, the second friction member is detachably connected to the second bracket, and/or a friction portion of the first friction member in contact with the first side and a friction portion of the second friction member in contact with the second side are symmetrically arranged relative to the brake disc, and/or the first friction member and/or the second friction member are configured into a block structure.

In an elevator braking device according to the present disclosure, optionally, the control portion comprises a fixed member connected to the second bracket, an electromagnetic member and a force supply member which are mounted on the fixed member, and the first friction member is movably arranged between the fixed member and the brake disc along the guiding member, wherein in the first operating state the force supply member provides a force to the first friction member to move it towards the brake disc for causing the first friction member to come into contact with the brake disc, and in the second operating state the electromagnetic member provides an electromagnetic force to overcome the force and move the first friction member towards the fixed member for causing the first friction member to come out of contact with the brake disc.

In an elevator braking device according to the present disclosure, optionally, the fixed member is detachably connected to the second bracket, the electromagnetic member comprises one or more electromagnetic coils, and the force supply member comprises one or more elastic components, the elastic component including a spring.

In an elevator braking device according to the present disclosure, optionally, the fixed member and/or the first friction member are configured into a block structure.

In an elevator braking device according to the present disclosure, optionally, the elevator braking device further comprises an adjusting member connected to the second bracket and provided with an operating portion, for moving the second bracket along the guiding member relative to the first bracket by operation of the operating portion to limit a holding spacing between the second bracket and the first bracket in the second operating state.

In an elevator braking device according to the present disclosure, optionally, the adjusting member comprises a rod and an elastic component, one end of the rod extends through a side wall of the first bracket into the first accommodating area and connected to the second bracket, the operating portion is provided at the other end of the rod and is located outside of the first bracket, and the elastic component is sleeved on the rod and pressed against the first bracket and the second bracket, the elastic component including a spring.

In an elevator braking device according to the present disclosure, optionally, the guiding member comprises one or more first guiding members arranged to extend through the first accommodating area and the second accommodating area, and one or more second guiding members arranged parallel to the first guiding member and extending through the first accommodating area.

In an elevator braking device according to the present disclosure, optionally, the first guiding member and the second guiding member are configured into a rod shape, and the first bracket, the second bracket, the control portion and the first friction member are each provided with through holes for the first guiding member and the second guiding member to pass therethrough respectively, and the first guiding member and the second guiding member are each provided with a limit portion to limit a corresponding displacement of them relative to the first bracket or the second bracket.

In an elevator braking device according to the present disclosure, optionally, a bushing is provided between the first guiding member, and the first bracket and/or the second bracket and/or the control portion and/or the first friction member; and/or, a bushing is provided between the second guiding member, and the first bracket and/or the second bracket and/or the control portion and/or the first friction member.

In an elevator braking device according to the present disclosure, optionally, the first bracket and the second bracket are configured into a substantially U shape, the second bracket is arranged upside down relative to the first bracket, with a first side thereof disposed in the first accommodating area and a second side opposite to the first side disposed outside of the first bracket and adjacent to the brake disc.

In an elevator braking device according to the present disclosure, optionally, an opening is provided on the side of the first bracket facing the brake disc, the friction portion of the first friction member entering and exiting the common area through the opening when it moves along the guiding member.

Second, according to another aspect of the present disclosure, an elevator system is also provided, comprising:
an elevator driving device, configured to supply power to drive an elevator system, wherein the elevator driving device has a brake disc; and
the elevator braking device according to any of the above, arranged adjacent to the brake disc and configured, through operations of coming into contact or out of contact with the brake disc, to prevent the power from being supplied to the elevator system by the elevator driving device in the first operating state, and to allow the power to be supplied to the elevator system by the elevator driving device in the second operating state.

Particular embodiments further may include at least one, or a plurality of, the following optional features, alone or in combination with each other:

In an elevator system according to the present disclosure, the elevator driving device includes a traction machine and a winch, and the first bracket of the elevator braking device is mounted on a housing of the elevator driving device.

The elevator braking device according to the present disclosure is compact in structure, low in cost, and easy to manufacture, install, and maintain. In addition, it has a large braking torque and outstanding working performance, and may combine the respective advantages of the block brake and the caliper disc brake. This elevator braking device has outstanding practicality and a wide range of applications, which may be configured for use in elevator systems of low, medium, or high-rise buildings, providing reliable guarantees for the safe operation of elevators. The elevator braking device according to the present disclosure may be installed and applied to various elevator systems such as elevators, escalators and moving walks.

The technical solutions of the present disclosure will be described in further detail below with reference to the accompanying drawings and embodiments. However, it should be appreciated that these drawings are designed merely for the purpose of explanation and only intended to conceptually illustrate the structures and configurations described herein, and are not required to be drawn to scale.
FIG. 1 is a three-dimensional structural schematic diagram of an example of an elevator system that may employ various embodiments of the present disclosure.
FIG. 2 is a three-dimensional structural schematic diagram of an embodiment of an elevator braking device according to the present disclosure.
FIG. 3 is a side-view structural schematic diagram of the embodiment of an elevator braking device shown in FIG. 2.
FIGS. 4 to 11 are three-dimensional structural diagrams of the first bracket, the second bracket, the control portion, the first friction member, the second friction member, the first guiding member, the circlip and the adjusting member in the embodiment of an elevator braking device shown in FIG. 2, respectively.
FIGS. 12 to 14 show a schematic diagram of the change process from a non-braking operating state to a braking operating state in the embodiment of an elevator braking device shown in FIG. 2, in which the brake disc located in the elevator driving device of the example of the elevator system is also shown.

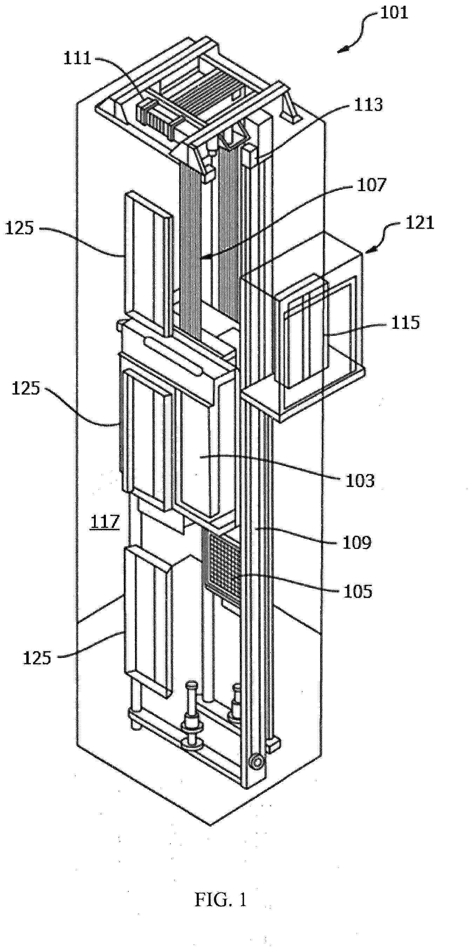

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown in FIG. 1, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism to provide operating power to elevator system 101, and such elevator driving devices are often referred to as traction machines, winches, etc. in practical applications. In accordance with embodiments of the present disclosure, the machine 111 can be configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments of the present disclosure may be employed in ropeless elevator systems using a linear motor to impart motion to an elevator car. Embodiments of the present disclosure may also be employed in ropeless elevator systems using a hydraulic lift to impart motion to an elevator car. Embodiments may further be employed in ropeless elevator systems using self-propelled elevator cars (e.g., elevator cars equipped with friction wheels, pinch wheels or traction wheels).

In addition, specific elevators and components are shown and described herein. FIG. 1 is merely a non-limiting example presented for illustrative and explanatory purposes. It should be noted that other elevator system configurations can be operated in conjunction with the elevator braking device disclosed herein. It should become apparent in the ensuing description that the present disclosure is also applicable to other types of elevator systems such as escalators and moving walks. In addition, for the sake of simplification, identical or similar components and features may only be indicated in one or several positions in the same drawing.

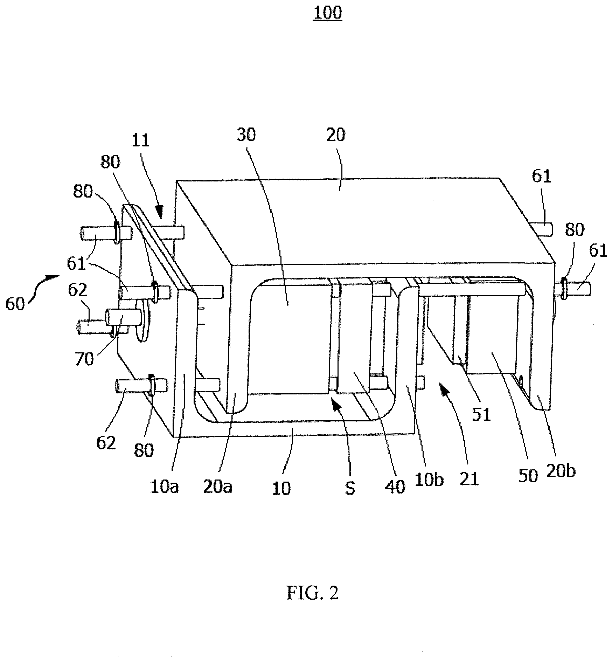

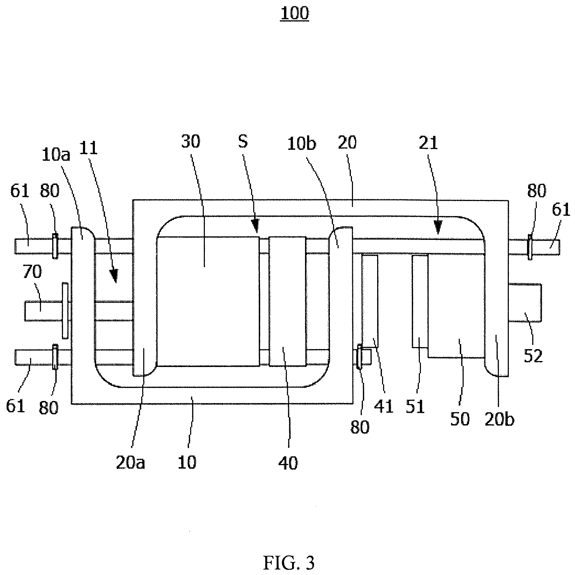

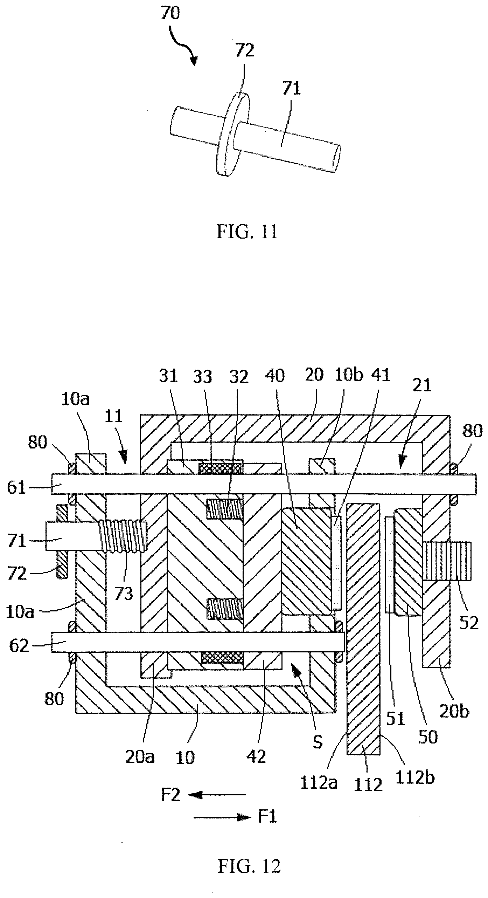

FIGS. 2 and 3 schematically illustrate the general structure of the elevator braking device 100 after assembly. The elevator braking device 100 may be mounted near the elevator driving device of the machine 111. For example, when it is necessary to stop elevator car 103 of the elevator system 101 at the current target landing, or when an emergency event occurs that requires the elevator to stop, the elevator braking device 100 may be used to brake the elevator driving device. The brake disc for braking operation located in the elevator driving device is schematically denoted with reference sign 112 in FIG.12 and other figures.

As used herein, in various embodiments, the elevator braking device 100 may be configured to have a first bracket 10, a second bracket 20, a control portion 30, a first friction member 40, and a second friction member 50. Wherein, the first bracket 10 and the second bracket 20 may be made of the same or different suitable materials as needed, such as steel, and the like. They may be constructed to each have an accommodating area 11 and an accommodating area 21. These two accommodating areas are arranged to intersect with each other in the assembled device, thereby forming a common area S. This may fully utilize the structural space, advantageously reduce the volume occupied by the device, and facilitate the formation of a compact layout. Working components such as the control portion 30 and first friction member 40 may be directly arranged for use in the common area S, thus avoiding occupation of other additional space.

The first bracket 10 may be fixedly mounted relative to the elevator driving device. For example, it may be mounted on the housing of the elevator driving device or other suitable positions on site. Guiding members 60 may be mounted on the first bracket 10 to guide and limit the movement path of components such as the second bracket 20, control portion 30, and first friction member 40. For example, after assembly of the elevator braking device 100, the first bracket 10 is mounted and fixed on site, and the second bracket 20 may move along the guiding members 60 relative to the first bracket 10, thereby changing its relative position with the first bracket 10. This will cause a change in the volume of the common area S formed by the current intersected part of these two brackets, and allow the components arranged therein to perform corresponding operations.

As used herein, in various embodiments, the first bracket 10 and the second bracket 20 may be configured to be substantially U shaped. For example, they may be readily made of U shaped steel. For example, as shown in FIGS. 2, 3, 4, and 5, the second bracket 20 may be arranged upside down relative to the first bracket 10 during assembly, so that one side 20a of the second bracket 20 enters the accommodating area 11 of the first bracket 10, and the other side 20b thereof is placed outside of the first bracket 10. This may cause the accommodating area 11 of the first bracket 10 and the accommodating area 21 of the second bracket 20 to intersect and overlap spatially, thereby forming the common area S and facilitating the formation of a compact overall structure.

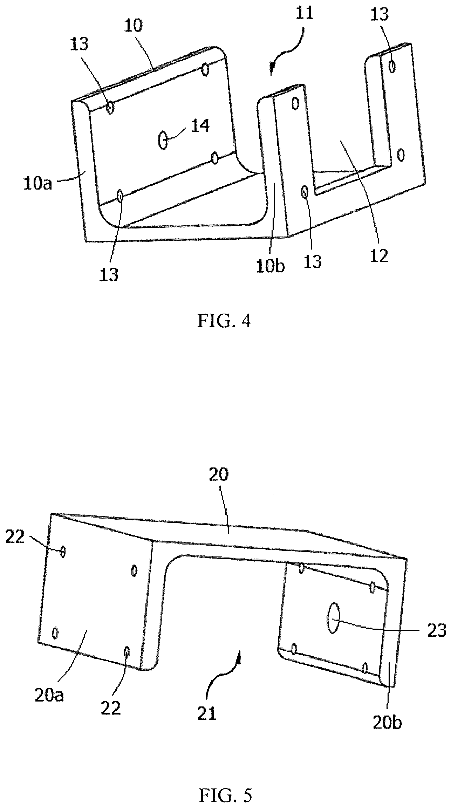

As an example illustrated herein, the guiding members 60, which is configured as one or more as needed, may be readily configured into a suitable shape such as a rod. For example, the guiding members 60 may be configured to include two relatively long guiding members 61 and two relatively short guiding members 62. At the same time, through-hole structures, which are schematically denoted with reference numerals 13, 22, 34, and 43 in FIGS. 4 and 5, respectively, may be provided on components such as the first bracket 10, the second bracket 20, the control portion 30, and the first friction member 40, so that guiding members 61 and 62 may be extend through the first bracket 10 or the second bracket 20 via such through-holes. In the example shown in FIGS. 2 and 3, it is illustrated in detail that guiding member 61 is arranged to extend through the accommodating area 11 of the first bracket 10 and the accommodating area 21 of the second bracket 20, and the guiding member 62 is arranged to be parallel to the guiding member 61 and extend through the accommodating area 11. By adopting the above arrangement, the first bracket 10 and the second bracket 20 can be quickly and accurately aligned and mounted in place, and reliable centering can be ensured for a long time when they and other components work, so that motion deviation will hardly occur and thus the braking performance of the elevator braking device 100 will not be affected.

It should be noted that the present disclosure allows for the design and adjustment of the specific structure, configuration, installation and use of the guiding members 60 according to actual application requirements. For example, in one or some embodiments, the aforementioned guiding members 61 may be configured as one, two, or more, and the same applies to guiding members 62. For another example, in one or some embodiments, the guiding members 62 may be removed. For yet another example, a limit portion 63 may be arranged on the guiding member 60 to limit the displacement between the guiding member 60 and the first bracket 10 or the second bracket 20 accordingly. For example, a concave structure may be constructed at any suitable position, such as at the end or in the middle, on the guiding member 60 to serve as the limit portion 63. Then, a mating member 80 such as a circlip, may be mounted on the limit portion 63 to play a position limiting role. It should be noted that the limit portion 63 may also be in the form of, for example, a convex structure or others, which may be implemented using machining, casting, welding, and other processes. The limit portion 63 may be mounted at one or more positions on the guiding member 60 as needed, thus providing more convenience and flexibility for different practical applications and fully adapting to more system configuration scenarios.

Optionally, a bushing may be arranged between the guiding member 61 and one or more components such as the first bracket 10, the second bracket 20, the control portion 30 and the first friction member 40, used in cooperation with the guiding member 61 in practical applications, so as to enhance wear resistance, reduce noise and vibration effects, and improve the working performance of the device. The above scenario is also applicable to the guiding member 62.

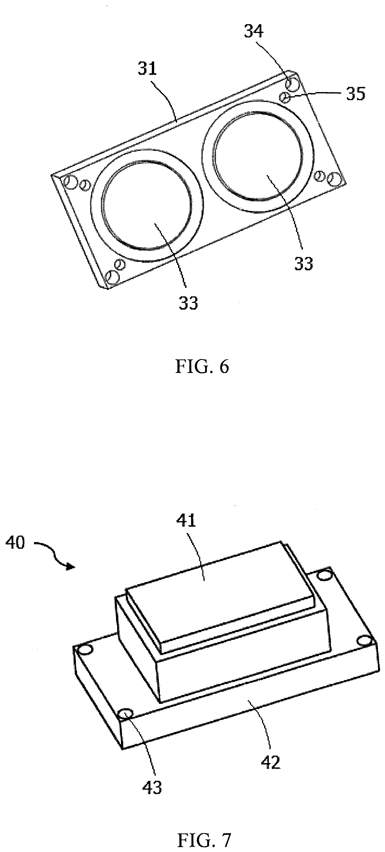

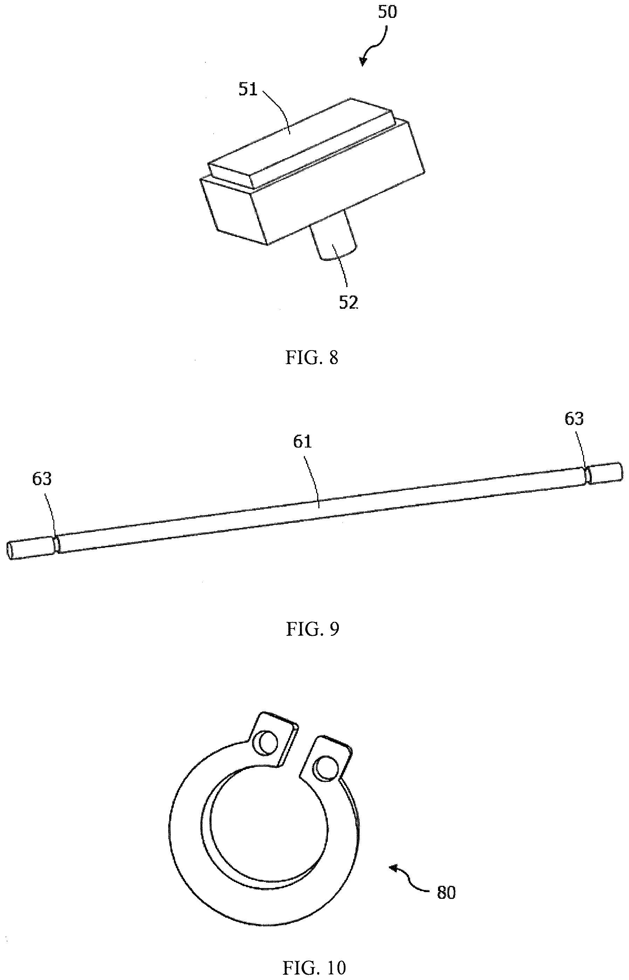

As used herein, in various embodiments, the control portion 30 may be arranged in a common area S provided by the first bracket 10 and the second bracket 20 and connected to the second bracket 20, so that it can move relative to the first bracket 10 along with the second bracket 20 and be used to control the first friction member 40, thereby further controlling the second friction member 50. The control portion 30 may be connected to the controller 115 in the elevator system 101 and controlled by the latter. Referring to FIGS. 2, 6-8 and other figures, the control portion 30 may be configured to include a fixed member 31, a force supply member 32, and an electromagnetic member 33.

The fixed member 31 may be used as the supporting part for the force supply member 32, the electromagnetic member 33, and other components. It may be optionally configured into a suitable structure such as a block. The fixed member 31 may be fixedly connected to the second bracket 20 using any feasible method such as welding, or it may also be detachably connected to the second bracket 20 either separately or in combination with connecting members such as screws, bolts, slot matching structures, etc., thereby facilitating equipment installation and maintenance.

The force supply member 32 and the electromagnetic member 33, which may respectively provide force F1 and electromagnetic force F2 to the first friction member 40, are mounted on the fixed member 31. As used herein, in various embodiments, the force supply member 32 may be configured to use one or more elastic components as needed, such as but not limited to springs, and the like. One or more accommodating portions 35 may be provided on the fixed member 31 to place the elastic components accordingly. With the help of the force supply member 32, a force F1 can be applied to the first friction member 40, which can move the first friction member 40 towards the brake disc 112. In this way, when necessary, the first friction member 40 can be forced to move in place and can be pressed against the brake disc 112 in the elevator driving device to implement the braking operation, so that the elevator driving device can stop or slow down the current power supply to the elevator system, thus achieving the purpose of stopping or slowing down the operation of the elevator at this point.

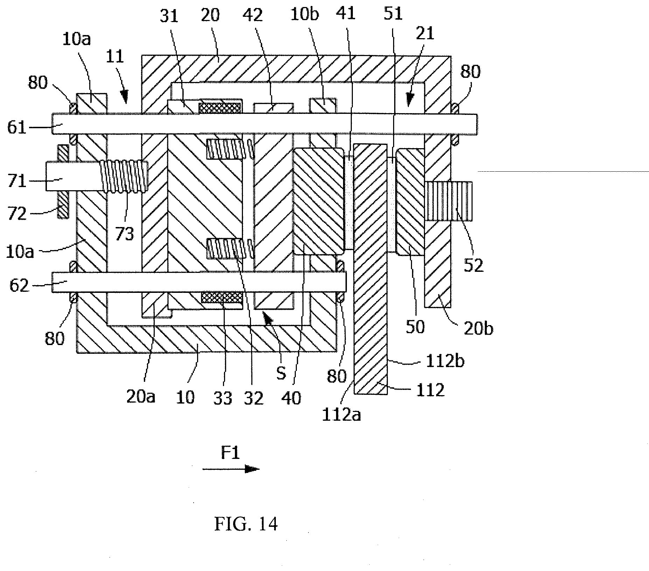

Referring to FIG. 14, as an exemplary illustration, it is shown that the elevator braking device 100, under the action of the above force F1 provided by the force supply member 32 (the electromagnetic member 33 that will be discussed later does not provide electromagnetic force at this point), can drive the first friction member 40 to come into contact with the side 112a of the brake disc 112 for braking operation, and the elevator braking device 100 will be in a braking operating state at this point. As shown in FIG. 14, the braking operation can be performed from the other side 112a of the brake disc 112 by the second friction member 50, which will be further described below.

With continued reference to FIG. 12, the electromagnetic member 33 is configured to provide an electromagnetic force F2 to the first friction member 40. Under the action of the electromagnetic force F2, the first friction member 40 will tend to move along the guiding member 60 towards the electromagnetic member 33 (i.e., in the direction away from the brake disc 112), which may be achieved by arranging or using magnetic materials such as iron that can respond to the electromagnetic attraction, on a side 42 of the first friction member 40 that faces the fixed member 31.

When the electromagnetic force F2 applied by the electromagnetic member 33 to the first friction member 40 is sufficient to overcome the force F1 applied by the force supply member 32 (which is opposite to the direction of the electromagnetic force F2), the first friction member 40 will come out from the previous braking operating state in contact with the brake disc 112, and then move along the guiding member 60 towards the fixed member 31, thereby releasing its original braking operation state on the brake disc 112 on the side 112a. At the same time, under the action of electromagnetic force, the first friction member 40 will also reverse attract and cause the fixed member 31 to drive the second bracket 20 to move along the guiding member 60 towards the brake disc 112, thereby allowing the second friction member 50 to come into contact with the side 112b of the brake disc 112 for contact braking operation. As the above movement process progresses, the first friction member 40 will have an impact on the force supply member 32, causing its output force F1 to increase. Once the current force F1 and electromagnetic force F2 reach a balance on the first friction member 40 and other components, the second bracket 20 and the components connected to it will remain stationary relative to the first bracket 10, and the elevator braking device 100 will enter a non-braking operating state.

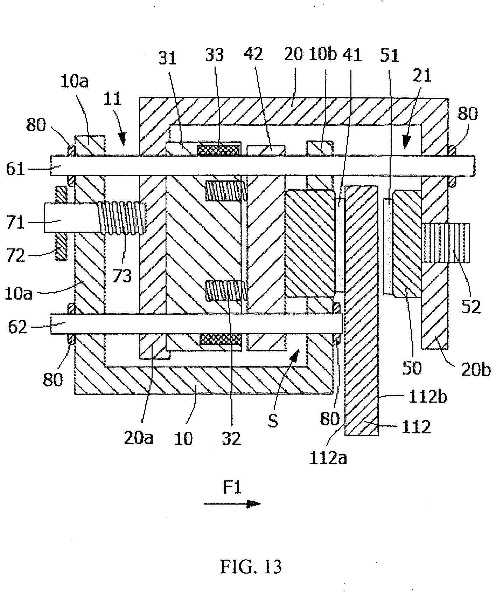

Referring to FIGS. 12 and 13, as an exemplary illustration, the process of the elevator braking device 100 transitioning from the braking operating state shown in FIG. 14 to the non-braking operating state shown in FIG. 12 due to the electromagnetic force provided by the electromagnetic member 33 as discussed above is shown in detail in these two figures. An intermediate process in the above state changes is shown in FIG.13. On the contrary, FIGS. 12 to 14 can also show that the elevator braking device 100 undergoes a change process from the non-braking operating state to the braking operating state, which will not be repeated.

In practical applications, the electromagnetic member 33 allows for any feasible way to provide electromagnetic force. For example, the electromagnetic member 33 may be configured with one or more electromagnetic coils as needed and mounted in a suitable position on the fixed member 31, where electromagnetic force can be generated and output when power is supplied to the electromagnetic coils. On the contrary, when the power is no longer supplied to the electromagnetic coils of the electromagnetic member 33, there will be no electromagnetic force outputting outward. At this point, the first friction member 40 will move along the guiding member 60 towards and come into contact with the side 112a of the brake disc 112 under the force applied by the force supply member 32. At the same time, the force supply member 32 will also apply force to the fixed member 31, pushing the second bracket 20 to move along the guiding member 60 towards the side 10a of the first bracket 10, so as to drive the second friction member 50 connected to the second bracket 20 to move towards and come into contact with the side 112b of the brake disc 112. It allows the elevator braking device 100 to enter the braking operating state as shown in FIG. 14.

It should be appreciated that the configurations of the electromagnetic force of the electromagnetic member 33 and the force of the force supply member 32 in the elevator braking device 100 may be designed and adjusted according to actual application requirements. The present disclosure does not make specific limitations in this regard, as long as they can be used in cooperation with each other and achieve the functions described above.

In the embodiments shown in FIG. 12 and other figures, when the elevator braking device 100 is used to perform braking operation on the elevator system 101, the braking operation may be carried out by the first friction member 40 and the second friction member 50 from the opposite sides 112a and 112b of the brake disc 112, respectively, i.e., achieving braking from two braking surfaces in a compact spatial layout of the elevator braking device 100, which can generate sufficient braking torque and braking effect. Of course, in some application scenarios, it is also allowed to use only the first friction member 40 for elevator braking operation without arranging the second friction member 50. That is, the present disclosure may also provide a single braking surface application solution.

As used herein, in various embodiments, the first friction member 40 and/or the second friction member 50 may be optionally configured into a block structure, which has a larger braking radius and thus has a better braking effect compared to the circular structure commonly used in caliper disc brakes that also use electromagnetic force but with a complex structure in the prior art. At the same time, it can provide greater braking torque and more reliable operational performance compared to existing block brakes. Therefore, the technological advantages are obvious.

As used herein, in various embodiments, a friction portion 41 is provided on the side of the first friction member 40 facing the brake disc 112, and a friction portion 51 is provided on the side of the second friction member 50 facing the brake disc 112. The friction portions 41 and 51 may be made of the same or different friction resistant materials, and their specific configuration dimensions may be the same or different. As an optional scenario, it may be considered to arrange the friction portions 41 and 51 symmetrically relative to the brake disc 112, which is beneficial for achieving force balance during braking operation.

As used herein, in various embodiments, an opening 12 may be optionally provided on the side 10b of the first bracket 10 facing the brake disc 112, so that the friction portion 41 of the first friction member 40 may enter and exit the common area S through the opening 12 when moving along the guiding member 60, thereby facilitating contact with the first side 112a of the brake disc 112 for braking operation or disengagement from the contact. An exemplary illustration of the above opening configuration is shown in FIG. 4.

In addition, the second friction member 50 may be detachably mounted on the second bracket 20. For example, the connecting part 52 between the second friction member 50 and the second bracket 20 may be configured with a threaded structure to detachably mount and connect the second friction member 50, for example, to the matching part 23 with a threaded hole structure on the second bracket 20. When a threaded connection method is used, it is also allowed to adjust the spacing between the friction portion 51 and the second side 112b of the brake disc 112, which facilitates the workers to adjust the braking operation of the elevator braking device 100 on the brake disc 112 as needed. For example, when the friction portion 51 is found to have certain wear after use, the second friction member 50 may be continued to be used by appropriately shortening the above spacing, which ensures the working performance of the elevator braking device and is beneficial for cost savings.

In addition, an adjusting member 70 may be set as an optional configuration in the elevator braking device 100. The adjusting member 70 is configured with an operating portion 72, which may be operated to move the second bracket 20 along the guiding member 60 relative to the first bracket 10. In this way, the distance between the second bracket 20 and the first bracket 10 may be adjusted and limited when the elevator braking device 100 in a non-braking operating state, wherein this distance is related to the spacing between the friction portion 51 and the second side 112b of the brake disc 112. That is, with the help of the adjusting member 70, the purpose of adjusting the spacing between the second friction member 50 and the brake disc 112 may be achieved. This helps to ensure that the braking performance of the elevator braking device will not be affected as the second friction member 50 may still be used in the case where the second friction member 50 the has undergone certain wear as described earlier.

As used herein, in various embodiments, the adjusting member 70 may be configured to have a rod 71 and an elastic component 73, which may be, for example, a spring or the like that is mounted on the rod 71. When assembling the elevator braking device 100, one end of the rod 71 may be threaded through the through-hole 14 on the side 10a of the first bracket 10 into the accommodating area 11 and connected to the second bracket 20. For example, they may be connected by detachable means such as threaded connections. After installation, the elastic component 73 mounted on the rod 71 will be pressed against the first bracket 10 and the second bracket 20. The operating portion 72 may be selected to be arranged at a suitable position on the rod 71, for example, at the other end of the rod 71 and outside of the first bracket 10 after installation, so that the workers may directly operate from the outside.

Unlike existing products such as block and caliper disc brakes in the prior art, the present disclosure proposes an innovative elevator braking device, which has a compact structure and may provide sufficient braking torque and better working performance. It is easy to manufacture, assemble, and maintain, and has significant cost advantages. As mentioned earlier, the elevator braking device has a wide range of applications and is fully suitable for configuration in elevator systems of low, medium, or high-rise buildings, and is applicable to various types of elevator systems including but not limited to elevators, escalators, moving walks, and the like.

An elevator braking device and elevator system according to the present disclosure have been described above in detail by way of examples only. These examples are merely used to illustrate the principles and embodiments of the present disclosure, rather than limiting the present disclosure. Various modifications and improvements can be made by those skilled in the art without departing from the scope of the present disclosure. Therefore, all equivalent technical solutions should fall within the scope of the present disclosure and be defined by the claims of the present disclosure.

## Claims

1. An elevator braking device, comprising:
a first bracket having a first accommodating area and provided with a guiding member, and fixedly mounted relative to an elevator driving device;
a second bracket having a second accommodating area and configured to move along the guiding member relative to the first bracket, wherein the second accommodating area intersects with the first accommodating area to form a common area, volume of the common area changing with movement of the second bracket; and
a control portion and a first friction member, wherein the control portion is arranged in the common area and connected to the second bracket, and the first friction member is arranged adjacent to the control portion and is movable along the guiding member relative to the second bracket under control of the control portion, so that the first friction member is in contact with a brake disc of the elevator driving device for braking operation in a first operating state of the elevator braking device, and is out of contact with the brake disc in a second operating state.

2. The elevator braking device according to claim 1, wherein the elevator braking device further comprises a second friction member arranged in the second accommodating area and connected to the second bracket, and the first friction member and the second friction member are in contact with opposite first and second sides of the brake disc respectively for the braking operation in the first operating state, and are out of contact with the first and second sides respectively in the second operating state.

3. The elevator braking device according to claim 2, wherein the second friction member is detachably connected to the second bracket, and/or a friction portion of the first friction member in contact with the first side and a friction portion of the second friction member in contact with the second side are symmetrically arranged relative to the brake disc, and/or the first friction member and/or the second friction member are configured into a block structure.

4. The elevator braking device according to any of claims 1 to 3, wherein the control portion comprises a fixed member connected to the second bracket, an electromagnetic member and a force supply member which are mounted on the fixed member, and the first friction member is movably arranged between the fixed member and the brake disc along the guiding member, wherein in the first operating state the force supply member provides a force to the first friction member to move it towards the brake disc for causing the first friction member to come into contact with the brake disc, and in the second operating state the electromagnetic member provides an electromagnetic force to overcome the force and move the first friction member towards the fixed member for causing the first friction member to come out of contact with the brake disc.

5. The elevator braking device according to claim 4, wherein the fixed member is detachably connected to the second bracket, the electromagnetic member comprises one or more electromagnetic coils, and the force supply member comprises one or more elastic components, the elastic component including a spring.

6. The elevator braking device according to claim 4 or 5, wherein the fixed member and/or the first friction member are configured into a block structure.

7. The elevator braking device according to any of claims 1 to 6, wherein the elevator braking device further comprises an adjusting member connected to the second bracket and provided with an operating portion, for moving the second bracket along the guiding member relative to the first bracket by operation of the operating portion to limit a holding spacing between the second bracket and the first bracket in the second operating state.

8. The elevator braking device according to claim 7, wherein the adjusting member comprises a rod and an elastic component, one end of the rod extends through a side wall of the first bracket into the first accommodating area and connected to the second bracket, the operating portion is provided at the other end of the rod and is located outside of the first bracket, and the elastic component is sleeved on the rod and pressed against the first bracket and the second bracket, the elastic component including a spring.

9. The elevator braking device according to any of claims 1 to 8, wherein the guiding member comprises one or more first guiding members arranged to extend through the first accommodating area and the second accommodating area, and one or more second guiding members arranged parallel to the first guiding member and extending through the first accommodating area.

10. The elevator braking device according to claim 9, wherein the first guiding member and the second guiding member are configured into a rod shape, and the first bracket, the second bracket, the control portion and the first friction member are each provided with through holes for the first guiding member and the second guiding member to pass therethrough respectively, and the first guiding member and the second guiding member are each provided with a limit portion to limit a corresponding displacement of them relative to the first bracket or the second bracket.

11. The elevator braking device according to claim 9 or10, wherein a bushing is provided between the first guiding member, and the first bracket and/or the second bracket and/or the control portion and/or the first friction member; and/or, a bushing is provided between the second guiding member, and the first bracket and/or the second bracket and/or the control portion and/or the first friction member.

12. The elevator braking device according to any of claims 1 to 11, wherein the first bracket and the second bracket are configured into a substantially U shape, the second bracket is arranged upside down relative to the first bracket, with a first side thereof disposed in the first accommodating area and a second side opposite to the first side disposed outside of the first bracket and adjacent to the brake disc.

13. The elevator braking device according to claim 12, wherein an opening is provided on the side of the first bracket facing the brake disc, the friction portion of the first friction member entering and exiting the common area through the opening when it moves along the guiding member.

14. An elevator system, comprising:
an elevator driving device, configured to supply power to drive an elevator system, wherein the elevator driving device has a brake disc; and
the elevator braking device according to any of claims 1 to 13, arranged adjacent to the brake disc and configured, through operations of coming into contact or out of contact with the brake disc, to prevent the power from being supplied to the elevator system by the elevator driving device in the first operating state, and to allow the power to be supplied to the elevator system by the elevator driving device in the second operating state.

15. The elevator system according to claim 14, wherein the elevator driving device includes a traction machine and a winch, and the first bracket of the elevator braking device is mounted on a housing of the elevator driving device.
